# EUROPEAN PATENT SPECIFICATION

(11) **EP 4 230 461 B1**
(45) Date of publication and mention of the grant of the patent: **19.08.2026**
(21) Application number: 23154721.7
(22) Date of filing: 02.02.2023
(51) Int. Cl.: B60K 17/344, B60K 17/00, B62D 25/24, F16F 15/12, F02F 7/00

(54) **NOISE-ABSORBING STRUCTURE FOR VEHICLE DRIVING DEVICE**
GERÄUSCHDÄMPFENDE STRUKTUR FÜR EINE FAHRZEUGANTRIEBSVORRICHTUNG
STRUCTURE D'ABSORPTION DE BRUIT POUR DISPOSITIF D'ENTRAÎNEMENT DE VÉHICULE

(30) Priority: 17.02.2022 JP 2022022778
(43) Date of publication of application: 23.08.2023
(73) Proprietor: Suzuki Motor Corporation, Hamamatsu-shi, Shizuoka 432-8611 (JP)
(72) Inventor: KUNO, Mineyuki, HAMAMATSU-SHI, 432-8611 (JP); TSUJIMA, Keita, HAMAMATSU-SHI, 432-8611 (JP); INOUE, Shoichi, HAMAMATSU-SHI, 432-8611 (JP)
(74) Representative: Plasseraud IP

(56) References cited:
- CN-A- 104 129 268
- JP-A- 2006 046 418
- JP-A- 2007 190 968
- KR-A- 20080 055 473

## Description

### [Technical Field]

The present invention relates to a noise absorbing structure for vehicular driving devices.

### [Background Art]

As a vehicle driving device noise-absorbing structure, a service vehicle transmission case described in JP2010-265933Ahas been known.

The service vehicle transmission case described in JP2010-265933A is a service vehicle transmission case which incorporates a hydraulic continuously variable transmission and has a rear wall portion covering a rear side of the hydraulic continuously variable transmission, including an annular rib which protrudes rearward from the rear wall portion and a closing member which is attached to a rear end face of the annular rib to close an opening thereof, wherein a noise-absorbing member is arranged inside the annular rib.

The service vehicle transmission case described in JP2010-265933A can reduce transmitted noise with the noise-absorbing member arranged inside the annular rib in a closed state.

Other examples of background art can be found in CN104129268A, KR20080055473A, JP2007190968A, and JP2006046418A.

### [Citation List]

### [Patent Literature]

[Patent Literature 1] JP2010-265933A

### [Summary of Invention]

### [Technical Problem]

The conventional service vehicle transmission case described in JP2010-265933A, however, requires a closing member to attach a noise-absorbing member, and the closing member needs to be fixed to an annular rib with a bolt.

For the above-described reason, the number of work man-hours to attach the noise-absorbing member to a hydraulic continuously variable transmission may increase to impair work efficiency of the work of attaching the noise-absorbing member.

The present invention has been made in view of the above-described circumstances, and has its object to provide a vehicle driving device noise-absorbing structure capable of reducing the number of work man-hours to attach a noise-absorbing member to a bracket and enhancing work efficiency of the work of attaching the noise-absorbing member.

### [Solution to Problem]

To reach the objective stated above, the invention is set out in the appended set of claims.

### [Advantageous Effects of Invention]

As described above, according to the aforementioned present invention, it is possible to reduce the number of work man-hours to attach a noise-absorbing member to a bracket and enhance work efficiency of the work of attaching the noise-absorbing member.

### [Brief Description of Drawings]

The following figures 4, 5, 6, 7 are not according to the invention and are present for illustration purposes only.
[Figure 1] Figure 1 is a plan view of a vehicle having a vehicle driving device noise-absorbing structure according to one embodiment of the present invention.
[Figure 2] Figure 2 is a plan view of a transfer device, a left bracket, and a right bracket having the vehicle driving device noise-absorbing structure according to the one embodiment of the present invention.
[Figure 3] Figure 3 is a bottom view of the transfer device, the left bracket, and the right bracket having the vehicle driving device noise-absorbing structure according to the one embodiment of the present invention.
[Figure 4] Figure 4 is a view showing the vehicle driving device noise-absorbing structure according to an example of prior art and is an exploded perspective view of the left bracket and a noise-absorbing member.
[Figure 5] Figure 5 is a view showing the vehicle driving device noise-absorbing structure according to an example of prior art and is a plan view of the left bracket and the noise-absorbing member.
[Figure 6] Figure 6 is a view showing the vehicle driving device noise-absorbing structure according to an example of prior art and is a bottom view of the left bracket and the noise-absorbing member.
[Figure 7] Figure 7 is a sectional view taken along arrows VII-VII in Figure 5.
[Figure 8] Figure 8 is a view showing the vehicle driving device noise-absorbing structure according to the one embodiment of the present invention and is a perspective view of the right bracket, a front-side noise-absorbing member, a rear-side noise-absorbing member, and a cover member.
[Figure 9] Figure 9 is a view showing the vehicle driving device noise-absorbing structure according to the one embodiment of the present invention and is an exploded perspective view of the right bracket, the front-side noise-absorbing member and the cover member, and the rear-side noise-absorbing member.
[Figure 10] Figure 10 is a sectional schematic view taken along arrows X-X in Figure 2.
[Figure 11] Figure 11 is a sectional schematic view taken along arrows XI-XI in Figure 2.
[Figure 12] Figure 12 is a view showing the vehicle driving device noise-absorbing structure according to the one embodiment of the present invention and is a perspective view of the front-side noise-absorbing member.
[Figure 13] Figure 13 is a view showing the vehicle driving device noise-absorbing structure according to the one embodiment of the present invention and is a bottom view of the right bracket.

### [Description of Embodiment]

The following paragraphs [0043] - [0047], [0059] - [0070], and [0074] - [0083] are not according to the invention and are present for illustration purposes only.

A vehicle driving device noise-absorbing structure according to one embodiment of the present invention is a vehicle driving device noise-absorbing structure in which a noise-absorbing member is attached to a bracket for attaching a vehicle driving device to a vehicle body, wherein the noise-absorbing member includes a first noise-absorbing member having a first tubular portion into which the bracket is to be inserted and a first engaging portion which is to be engaged with the bracket, a cover member is arranged on the noise-absorbing member, the cover member has a second tubular portion which covers an outer peripheral portion of the first tubular portion, and the first engaging portion is pushed against the bracket by the second tubular portion.

With the above-described configuration, the vehicle driving device noise-absorbing structure according to the one embodiment of the present invention can reduce the number of work man-hours to attach a noise-absorbing member to a bracket and enhance work efficiency of the work of attaching the noise-absorbing member.

### [Embodiment]

A vehicle driving device noise-absorbing structure according to one embodiment of the present invention will be described below with reference to the drawings.

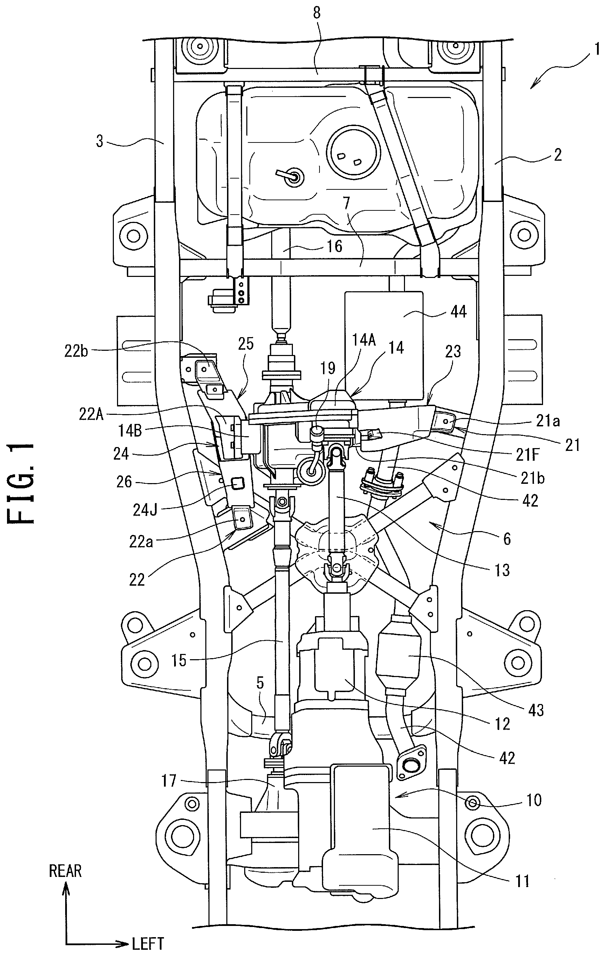

Figures 1 to 13 are views showing the vehicle driving device noise-absorbing structure according to the one embodiment of the present invention. In Figures 1 to 13, up-down, front-rear, and left-right directions are based on a vehicle driving device in a state of being arranged in a vehicle. A vehicle front-rear direction will be referred to as the front-rear direction; a vehicle left-right direction (vehicle width direction) will be referred to as the left-right direction; and a vehicle up-down direction (vehicle height direction) will be referred to as the up-down direction.

A configuration will be described first.

In Figure 1, a vehicle 1 includes a left side frame 2 and a right side frame 3. The left side frame 2 and the right side frame 3 are away from each other in a width direction of the vehicle 1 (hereinafter simply referred to as the vehicle width direction) and extend in the front-rear direction of the vehicle 1.

The left side frame 2 and the right side frame 3 are connected by a front cross-member 5, a center cross-member 6, and rear cross-members 7 and 8. The front cross-member 5, the center cross-member 6, and the rear cross-members 7 and 8 extend in the vehicle width direction.

The center cross-member 6 is formed in an X-shape in plan view.

A power train 10 is provided in the vehicle 1. The power train 10 has an engine 11 which is an internal combustion engine and a transmission 12 which changes a rotational speed of a crankshaft (not shown) of the engine 11 and produces power output.

The engine 11 is longitudinally arranged such that a rotation center axis of the crankshaft extends in the front-rear direction of the vehicle 1.

A front end of a propeller shaft 13 is connected to the transmission 12, and the propeller shaft 13 extends from the transmission 12 toward the rear of the vehicle 1. A transfer device 14 as a vehicle driving device is arranged behind the transmission 12, and a rear end of the propeller shaft 13 is connected to the transfer device 14.

With the above-described configuration, power of the engine 11 which is changed in speed by the transmission 12 is transmitted to the transfer device 14 via the propeller shaft 13.

The transfer device 14 has an input shaft to which the rear end of the propeller shaft 13 is connected and an output shaft which is arranged in parallel with the input shaft and is coordinated with the input shaft using gears and the like. The input shaft of the transfer device 14 is longitudinally arranged near the middle in the left-right direction of the vehicle 1 such that a rotation center axis thereof extends in the front-rear direction of the vehicle 1.

The output shaft of the transfer device 14 is longitudinally arranged to the right of the vehicle 1 and between the input shaft and the right side frame 3 such that a rotation center axis thereof extends in the front-rear direction of the vehicle 1. A rear end of a front propeller shaft 15 is connected to a front end of the output shaft of the transfer device 14.

A front end of a rear propeller shaft 16 is connected to a rear end of the output shaft of the transfer device 14. For this reason, the mass of the transfer device 14 concentrates on a right-side portion where the output shaft is arranged to affect vibration characteristics.

The front propeller shaft 15 extends from the transfer device 14 toward a lateral of the power train 10 to the front of the vehicle 1.

A front end of the front propeller shaft 15 is connected to a front differential device 17 which is arranged to the right of and below the power train 10. The front differential device 17 transmits power of the front propeller shaft 15 to front wheels (not shown) via left and right drive shafts (not shown) such that the front wheels are capable of differential rotation.

A rear end of the rear propeller shaft 16 is connected to a rear differential device (not shown). The rear differential device transmits power of the rear propeller shaft 16 to rear wheels (not shown) via left and right drive shafts (not shown) such that the rear wheels are capable of differential rotation.

The transfer device 14 is provided with a selector lever 19. A driver can select among neutral that outputs no driving force, two-wheel drive that drives only the rear wheels, and four-wheel drive that drives the front wheels and the rear wheels by manipulating the selector lever 19. Additionally, a reduction gear ratio can be switched between a high-gear one and a low-gear one.

When the driver manipulates the selector lever 19, and either one of the two-wheel drive and the four-wheel drive is selected, the transfer device 14 switches a transmission path between a two-wheel drive state where power transmitted from the propeller shaft 13 is not transmitted to the front propeller shaft 15 and a four-wheel drive state where power is also transmitted to the front propeller shaft 15.

With the above-described configuration, the vehicle 1 constitutes a part-time 4WD vehicle capable of switching between the two-wheel drive and the four-wheel drive. Note that the transfer device 14 may be configured so as to have a power transmission path which causes the vehicle 1 to be driven with all four wheels full-time, i.e., so as to constitute a full-time 4WD vehicle.

The left side frame 2 and the transfer device 14 are connected by a left bracket 21 made of metal.

The left bracket 21 extends leftward from the transfer device 14, and a left end portion 21a thereof is elastically connected to the left side frame 2 via a mount member (not shown).

A right end portion 21b of the left bracket 21 is fixed to a connecting portion 14B which is formed at a left side surface of a case 14A of the transfer device 14 with a bolt. The left end portion 21a of the left bracket 21 according to the present embodiment constitutes one end portion of a bracket, and the right end portion 21b of the left bracket 21 constitutes the other end portion of the bracket.

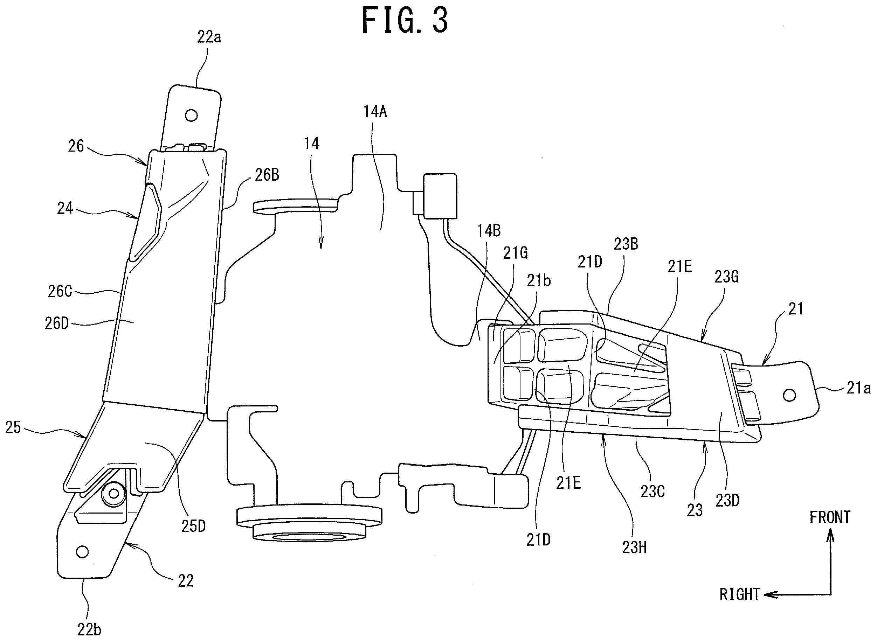

As shown in Figure 3, a connecting portion 21G is provided at the right end portion 21b of the left bracket 21. The connecting portion 21G has an attachment surface facing to the upper right. The connecting portion 21G is attached to the transfer device 14 by fixation of the attachment surface to the connecting portion 14B of the case 14A with a bolt (not shown).

In other words, the connecting portion 14B, to which the connecting portion 21G of the left bracket 21 is to be fixed, is provided at the left side surface of the case 14A of the transfer device 14.

As shown in Figure 1, the right side frame 3 and the transfer device 14 are connected by a right bracket 22 made of metal. The right bracket 22 extends in the front-rear direction along the right side frame 3 to the left of the right side frame 3, and an intermediate portion in the front-rear direction is fixed to the transfer device 14.

A front end portion 22a of the right bracket 22 is elastically connected to the right side frame 3 via a mount member (not shown), and a rear end portion 22b of the right bracket 22 is elastically connected to the right side frame 3 via a mount member (not shown).

The left side frame 2, the right side frame 3, and the center cross-member 6 according to the present embodiment constitute a vehicle body, and the left bracket 21 and the right bracket 22 constitute a bracket.

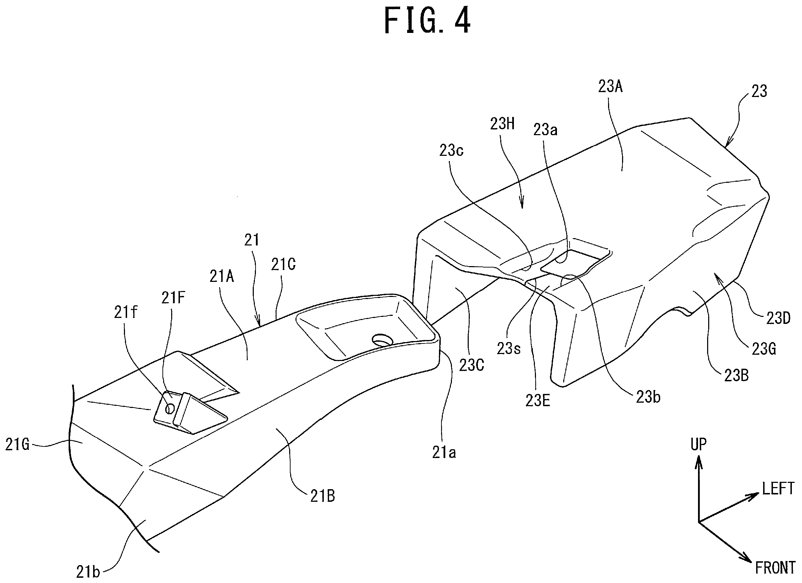

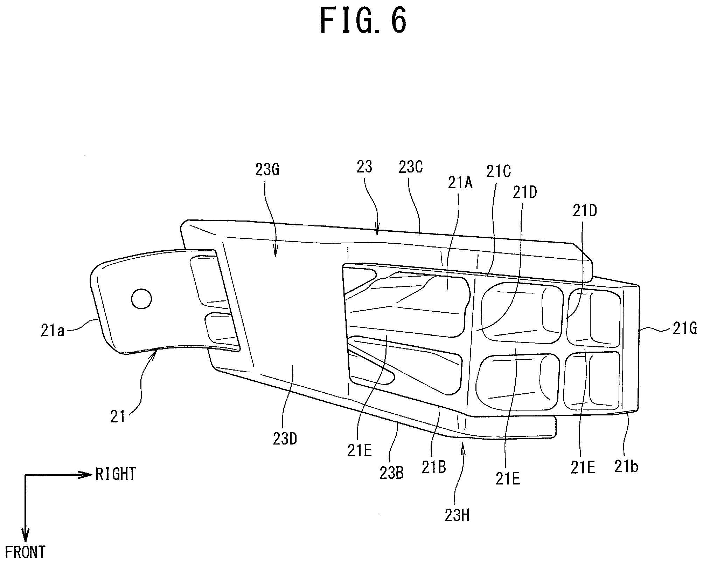

As shown in Figures 4 and 6, the left bracket 21 includes an upper wall 21A, a front wall 21B which extends downward from a front end edge of the upper wall 21A, and a rear wall 21C which extends downward from a rear end edge of the upper wall 21A and is formed in a generally U-shape which opens downward in a section perpendicular to the vehicle width direction.

As shown in Figures 3 and 6, front-rear direction ribs 21D which extend along the vehicle front-rear direction are formed at an inner surface of the left bracket 21. The front-rear direction ribs 21D connect the front wall 21B and the rear wall 21C.

A vehicle-width direction rib 21E which extends along the vehicle left-right direction is formed at the inner surface of the left bracket 21. The vehicle-width direction rib 21E extends in the vehicle width direction so as to connect the front-rear direction ribs 21D at a middle portion in the front-rear direction between the front wall 21B and the rear wall 21C.

The left bracket 21 is reinforced with the front-rear direction ribs 21D and the vehicle-width direction rib 21E and thus has high rigidity.

As shown in Figures 3 and 6, a length in the front-rear direction of the left bracket 21 is set shorter on the left side frame 2 side (the left end portion 21a side) and longer on the transfer device 14 side (the right end portion 21b side) than on the left side frame 2 side.

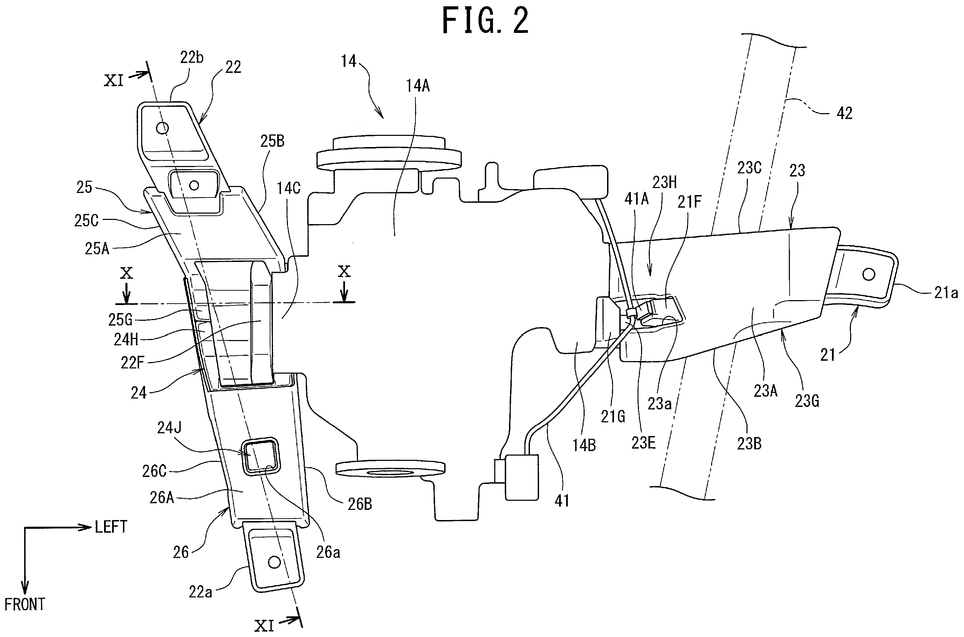

As shown in Figures 4, 5, and 7, a boss portion 21F is provided on the upper wall 21A of the left bracket 21, and the boss portion 21F protrudes rightward and obliquely upward from the upper wall 21A toward the transfer device 14 (see Figure 2).

In other words, a component attachment surface is formed at the boss portion 21F, and the boss portion 21F extends obliquely from the upper wall 21A such that the attachment surface protrudes toward the transfer device 14.

As shown in Figure 2, a clamp 41A of a switch cord 41 is attached to an upper end of the boss portion 21F. The switch cord 41 connects the transfer device 14 and a controller (not shown), and the clamp 41A holds the switch cord 41 and is attached and fixed to the boss portion 21F using a bolt or the like.

The switch cord 41 transmits a signal corresponding to a selector position of the selector lever 19 from the transfer device 14 to the controller. The boss portion 21F according to the present embodiment constitutes a protruding portion, and the clamp 41A constitutes a predetermined in-vehicle component.

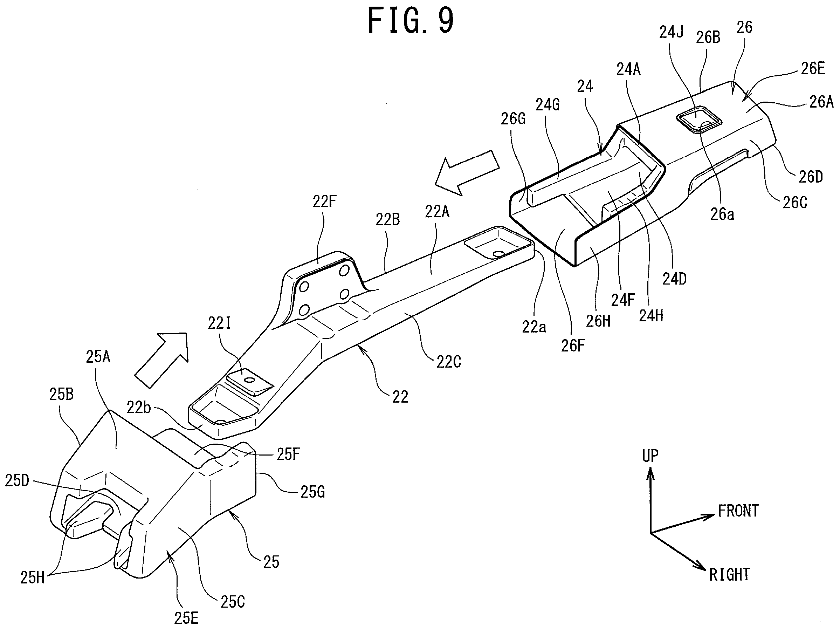

As shown in Figures 2 and 9, a connecting portion 22F is provided at a left edge portion of a middle portion in the front-rear direction of the right bracket 22 so as to protrude upward.

As shown in Figure 2, a connecting portion 14C is provided at a right side surface of the case 14A of the transfer device 14, and the connecting portion 22F of the right bracket 22 is fixed to the connecting portion 14C with a bolt (not shown).

As described above, the transfer device 14 is elastically supported by the left side frame 2 via the left bracket 21 and is elastically supported by the right side frame 3 via the right bracket 22.

As shown in Figures 9, 10, and 13, the right bracket 22 has an upper wall 22A, a left wall 22B which extends downward from a left end edge of the upper wall 22A, and a right wall 22C which extends downward from a right end edge of the upper wall 22A and is formed in a generally U-shape which opens downward in a section perpendicular to the front-rear direction.

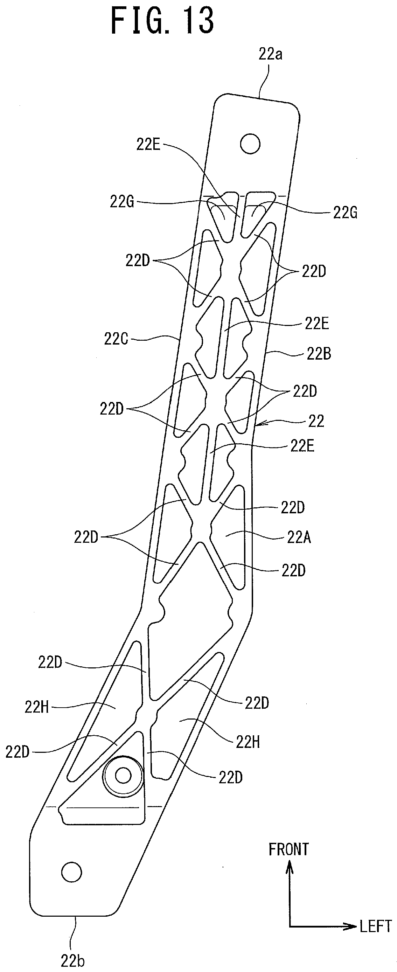

As shown in Figure 13, a plurality of inclined ribs 22D are formed between the left wall 22B and the right wall 22C at an inner surface (lower surface) of the right bracket 22 so as to connect the left wall 22B and the right wall 22C. Each inclined rib 22D is inclined with respect to a direction in which the left wall 22B, the right wall 22C, and the right bracket 22 extend.

The inclined ribs 22D are formed to cross in an X-shape in bottom view of the right bracket 22. The X-shaped pairs of inclined ribs 22D are arranged to be continuously lined up in the front-rear direction.

A front-rear direction rib 22E is provided in the middle in the vehicle width direction between the left wall 22B and the right wall 22C at a front-side inner surface (lower surface) of the right bracket 22. The front-rear direction rib 22E extends in the same direction as the direction, in which the right bracket 22 extends, so as to connect points where the inclined ribs 22D cross.

As shown in Figure 9, the connecting portion 22F protrudes upward from the upper wall 22A of the right bracket 22. A width in the vehicle width direction of the right bracket 22 is formed such that a width on a front side is narrower than a width on a rear side in front of the connecting portion 22F and such that the width on the rear side is wider than the width on the front side.

The width in the vehicle width direction of the right bracket 22 is also formed such that a width on a front side is wider behind the connecting portion 22F and such that a width on a rear side is narrower than the width on the front side.

In other words, the width in the vehicle width direction of the right bracket 22 is formed widest at a point near the connecting portion 22F and is formed so as to decrease gradually from near the connecting portion 22F toward the front end portion 22a or the rear end portion 22b.

A length in the front-rear direction of the right bracket 22 is formed such that a length of a portion behind the connecting portion 22F is shorter than a length of a portion in front of the connecting portion 22F.

As shown in Figures 2 and 3, a noise-absorbing member 23 which is made of an elastic member, such as polyurethane rubber, is attached to the left bracket 21.

The noise-absorbing member 23 has an upper wall 23A which is in contact with the upper wall 21A of the left bracket 21, a front wall 23B which extends downward from a front end edge of the upper wall 23A and is in contact with the front wall 21B of the left bracket 21, and a rear wall 23C which extends downward from a rear end edge of the upper wall 23A and is in contact with the rear wall 21C of the left bracket 21.

In other words, the noise-absorbing member 23 covers the left bracket 21 from above and is in contact with all surfaces to suppress vibration of the left bracket 21 and inhibit emission of noise to a space with a passenger compartment above the noise-absorbing member 23. A length in the front-rear direction of the noise-absorbing member 23 is formed shorter on the left side frame 2 side and longer on the transfer device 14 side than on the left side frame 2 side, as in the left bracket 21.

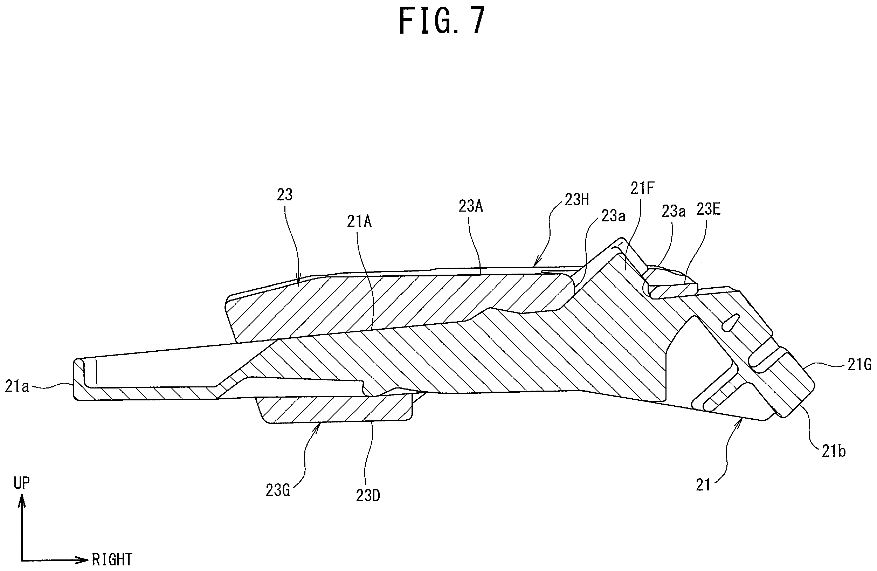

As shown in Figures 6 and 7, a tubular portion 23G is provided at a left-side portion of the noise-absorbing member 23. The tubular portion 23G is configured to include a left end portion of the upper wall 23A, a left end portion of the front wall 23B, a left end portion of the rear wall 23C, and a bottom wall 23D which connects a lower end portion of the left end portion of the front wall 23B and a lower end portion of the left end portion of the rear wall 23C.

In other words, the tubular portion 23G is configured to include the upper wall 23A, the front wall 23B, the rear wall 23C, and the bottom wall 23D, is arranged to surround an outer peripheral portion on the left end portion 21a side of the left bracket 21 and is in contact with an outer peripheral portion of the left bracket 21.

The tubular portion 23G, in which the left bracket 21 is inserted, is formed such that an inner dimension (open width) on the left end portion 21a side of the left bracket 21 is smaller than an inner dimension (open width) on the right end portion 21b side (the transfer device 14 side) of the left bracket 21.

For the above-described reason, the noise-absorbing member 23 is configured to be attachable to and detachable from the left bracket 21 attached to the transfer device 14, from the left end portion 21a side of the left bracket 21.

The noise-absorbing member 23 includes a noise-absorbing member body portion 23H. The noise-absorbing member body portion 23H is composed of the upper wall 23A, the front wall 23B, and the rear wall 23C, excluding the tubular portion 23G, of the noise-absorbing member 23 and extends from the tubular portion 23G along the left bracket 21 to the transfer device 14.

In other words, the noise-absorbing member body portion 23H extends from the tubular portion 23G along the left bracket 21 in a direction in which the left bracket 21 extends.

As shown in Figure 4, the noise-absorbing member body portion 23H is formed in a generally U-shape which opens downward in a section perpendicular to the vehicle width direction. The upper wall 23A, the front wall 23B, and the rear wall 23C of the noise-absorbing member body portion 23H are in contact with the upper wall 21A, the front wall 21B, and the rear wall 21C of the left bracket 21.

In other words, a lower side of the noise-absorbing member body portion 23H is open, and a lower surface of the left bracket 21 is not covered by the noise-absorbing member body portion 23H even in a state where the noise-absorbing member body portion 23H is attached.

In other words, a portion on the right end portion 21b side of the left bracket 21 is covered by the noise-absorbing member body portion 23H from above. The contact suppresses vibration of the portion and inhibits emission of noise to the space with the passenger compartment above the portion.

As shown in Figure 1, an exhaust pipe 42 is provided in the vehicle 1. The exhaust pipe 42 extends rearward from a portion to the left of the engine 11 in a left-side portion of the vehicle 1 and discharges exhaust gas discharged from the engine 11 to behind the vehicle 1. A catalyst 43 and a silencer 44 are attached to the exhaust pipe 42, the catalyst 43 cleans up exhaust, and the silencer 44 muffles exhaust noise.

As shown in Figures 1 and 2, the exhaust pipe 42 passes below the left bracket 21 in the front-rear direction, and the noise-absorbing member body portion 23H is located above the exhaust pipe 42. That is, the bottom wall 23D is not arranged above the exhaust pipe 42, and the tubular portion 23G and the exhaust pipe 42 are away from each other in the vehicle width direction in top view.

In other words, in the left bracket 21 located directly above the exhaust pipe 42, a lower side is not covered by the noise-absorbing member body portion 23H and is naked to the exhaust pipe 42. The left bracket 21 is directly exposed to heat of the exhaust pipe 42.

In the up-down direction, the noise-absorbing member 23 is not directly opposed to the exhaust pipe 42, and hot air rising from the exhaust pipe 42 is prevented from acting directly.

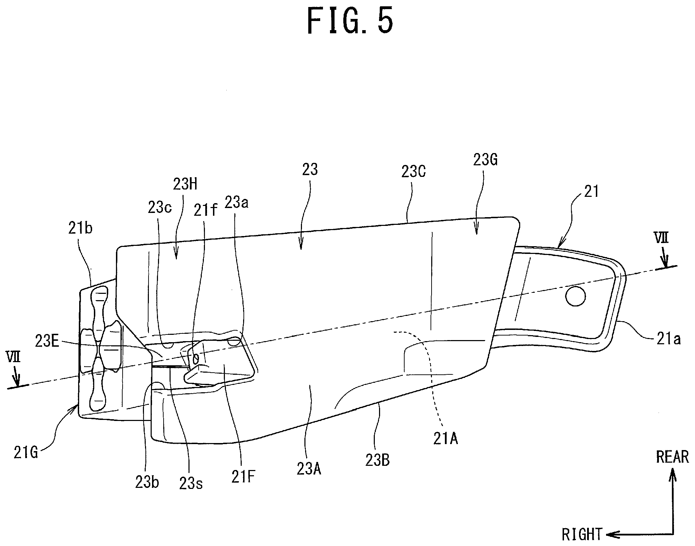

As shown in Figures 4 and 5, a hole 23a is formed in the upper wall 23A of the noise-absorbing member body portion 23H. The boss portion 21F of the left bracket 21 is inserted in the hole 23a and protrudes from the hole 23a to outside the noise-absorbing member 23. The noise-absorbing member 23 is engaged with the boss portion 21F at the hole 23a.

As shown in Figure 2, a width in the vehicle width direction of the clamp 41A of the switch cord 41 is set larger than a width in the vehicle width direction of the hole 23a. That is, the clamp 41A that has a larger width in the vehicle width direction than the width in the vehicle width direction of the hole 23a is attached to the boss portion 21F. This inhibits the noise-absorbing member 23 from coming off the boss portion 21F.

A fitting portion 21f (see Figures 4 and 5) on which the clamp 41A is to be fit is formed at the boss portion 21F. The fitting portion 21f serves for positioning which restricts a posture of the clamp 41A, and the clamp 41A does not come off the boss portion 21F even if a large external force is applied to the clamp 41A.

As shown in Figures 4 and 5, a thin-plate portion 23E is formed over a range from the hole 23a to a right-side end edge at the upper wall 23A of the noise-absorbing member body portion 23H on the transfer device 14 side. The thin-plate portion 23E is formed to have a thickness smaller than a thickness of the upper wall 23A (see Figure 7). The thin-plate portion 23E is located below an upper surface of the upper wall 23A of the noise-absorbing member body portion 23H.

As shown in Figure 4, a left edge of the thin-plate portion 23E constitutes a part of a peripheral edge of the hole 23a. That is, the hole 23a is surrounded by the upper wall 23A of the noise-absorbing member body portion 23H and the left edge of the thin-plate portion 23E.

As shown in Figure 5, front and rear portions of the thin-plate portion 23E are connected to the upper wall 23A of the noise-absorbing member body portion 23H by a front end portion 23b and a rear end portion 23c. A slit 23s which extends in the vehicle width direction from the hole 23a to a right-side end edge is formed in a middle portion in the front-rear direction of the thin-plate portion 23E.

If the boss portion 21F and the hole 23a get closer together, and the boss portion 21F comes into contact with the thin-plate portion 23E when the noise-absorbing member 23 is attached to the left bracket 21, the boss portion 21F pushes the thin-plate portion 23E upward. The thin-plate portion 23E is elastically deformed so as to open the slit 23s of the thin-plate portion 23E, which causes the boss portion 21F to pass through the thin-plate portion 23E. The boss portion 21F can be easily inserted into the hole 23a.

In other words, the thin-plate portion 23E is easily elastically deformed when an external force which inserts the boss portion 21F into the hole 23a is applied at the time of assembly of the noise-absorbing member 23 to the left bracket 21. After the noise-absorbing member 23 is assembled to the left bracket 21, the thin-plate portion 23E returns to its original position, slips beneath a lower right side of the boss portion 21F, and engages with the boss portion 21F (see Figure 7).

The thin-plate portion 23E has such a high hardness that the thin-plate portion 23E is not deformed even when vibration is applied from the left bracket 21 to the noise-absorbing member 23 due to, e.g., running of the vehicle 1.

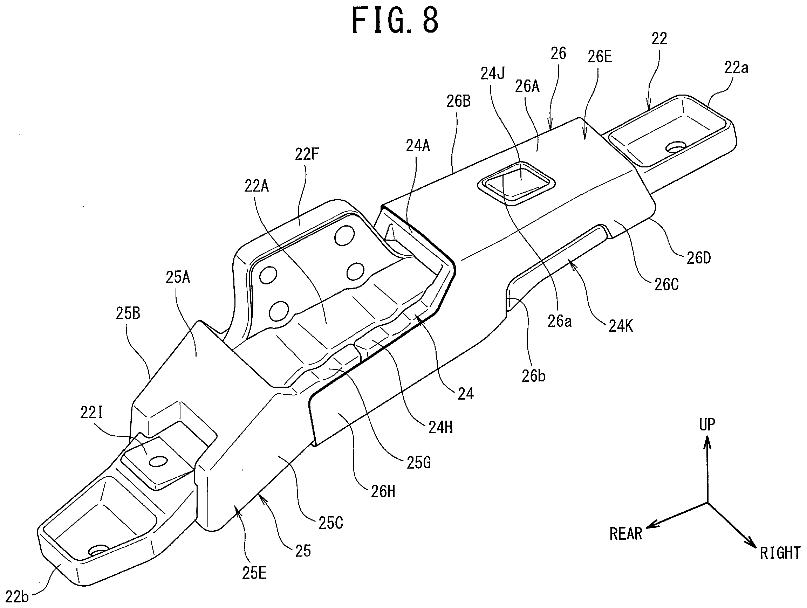

As shown in Figures 8 and 9, a front-side noise-absorbing member 24 which is made of an elastic member, such as polyurethane rubber, is attached to the right bracket 22 in front of the connecting portion 22F.

As shown in Figures 8, 11, and 12, the front-side noise-absorbing member 24 includes an upper wall 24A which is in contact with the upper wall 22A of the right bracket 22, a left wall 24B which extends downward from a left end edge of the upper wall 24A and is in contact with the left wall 22B of the right bracket 22, a right wall 24C which extends downward from a right end edge of the upper wall 24A and is in contact with the right wall 22C of the right bracket 22, and a bottom wall 24D which connects a lower end portion of the left wall 24B and a lower end portion of the right wall 24C.

The upper wall 24A, the left wall 24B, the right wall 24C, and the bottom wall 24D are in contact with an outer peripheral portion of the right bracket 22 so as to surround the outer peripheral portion of the right bracket 22 on a front side of the front-side noise-absorbing member 24 and constitute a tubular portion 24E. The tubular portion 24E according to the present embodiment constitutes a first tubular portion according to the present invention.

In other words, the right bracket 22 is surrounded by the front-side noise-absorbing member 24. The contact suppresses vibration of the right bracket 22 and inhibits emission of noise.

The tubular portion 24E, in which the right bracket 22 is inserted, is formed such that an inner dimension (open width) on the front end portion 22a side of the right bracket 22 is smaller than an inner dimension (open width) on the connecting portion 22F side (the transfer device 14 side) of the right bracket 22.

For the above-described reason, the front-side noise-absorbing member 24 is configured to be attachable to and detachable from the right bracket 22 attached to the transfer device 14, from the front end portion 22a side of the right bracket 22.

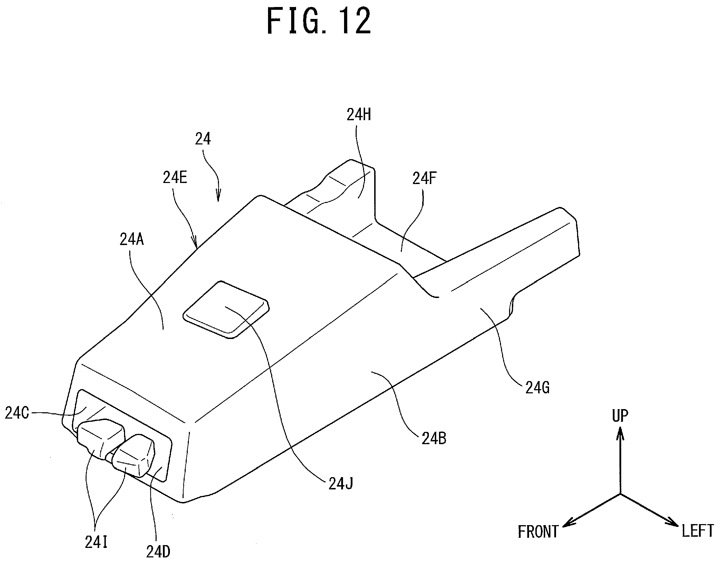

As shown in Figure 12, the front-side noise-absorbing member 24 has a rear-side bottom wall 24F which extends rearward from the tubular portion 24E so as to extend the bottom wall 24D, a rear-side left wall 24G which protrudes upward from a left end edge of the rear-side bottom wall 24F and extends rearward so as to extend the left wall 24B of the tubular portion 24E, and a rear-side right wall 24H which protrudes upward from a right end edge of the rear-side bottom wall 24F and extends rearward so as to extend the right wall 24C of the tubular portion 24E.

The rear-side bottom wall 24F covers a lower side of the right bracket 22, the rear-side left wall 24G is in contact with the left wall 22B of the right bracket 22, and the rear-side right wall 24H is in contact with the right wall 22C of the right bracket 22.

In other words, the rear-side bottom wall 24F, the rear-side left wall 24G, and the rear-side right wall 24H are in contact with the outer peripheral portion excluding the upper wall 22A of the right bracket 22, the front-side noise-absorbing member 24 has no upper wall behind the tubular portion 24E, and the upper wall 22A of the right bracket 22 is exposed between the rear-side left wall 24G and the rear-side right wall 24H (see Figure 8).

Heights of the rear-side left wall 24G and the rear-side right wall 24H are formed lower than heights of the left wall 24B and the right wall 24C of the tubular portion 24E.

As shown in Figures 9 and 12, lengths in the front-rear direction of the rear-side bottom wall 24F and the rear-side right wall 24H are formed equal, and a length in the front-rear direction of the rear-side left wall 24G is formed longer than the lengths in the front-rear direction of the rear-side bottom wall 24F and the rear-side right wall 24H.

In other words, the rear-side left wall 24G extends so as to protrude rearward further than the rear-side bottom wall 24F and the rear-side right wall 24H. For this reason, a lower portion of the rear-side left wall 24G has a shape notched by an amount corresponding to a height of the rear-side bottom wall 24F, and a rear-side lower surface of the rear-side left wall 24G has almost the same height position as an upper surface of the rear-side bottom wall 24F.

A width in the vehicle width direction of the front-side noise-absorbing member 24 is formed wider on a rear side and narrower on the front side (the tubular portion 24E side) than on the rear side. The front end portion 22a of the right bracket 22 that is narrower in a width in the vehicle width direction than the connecting portion 22F is inserted in the tubular portion 24E on the front side.

As shown in Figure 12, one pair of engaging projections 24I is formed at a front end portion of the bottom wall 24D of the tubular portion 24E. The engaging projections 24I protrude upward from the bottom wall 24D. That is, the engaging projections 24I protrude from the bottom wall 24D inside the tubular portion 24E.

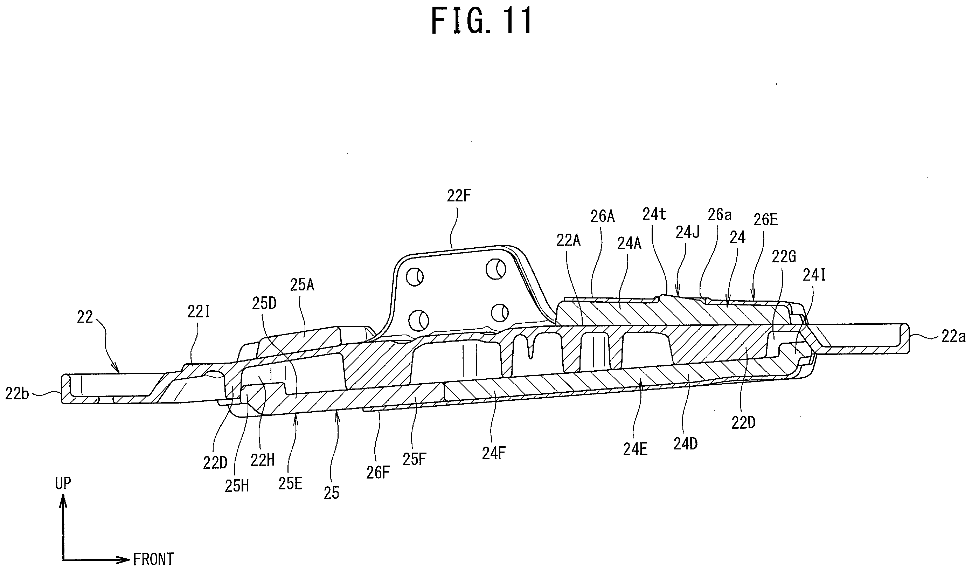

As shown in Figure 13, one pair of groove portions 22G is formed between the inclined ribs 22D on the front end portion 22a side of the right bracket 22 and the front-rear direction rib 22E, and the engaging projections 24I are engaged with the groove portions 22G (see Figure 11).

Specifically, the one pair of engaging projections 24I is in the one pair of groove portions 22G, holds the front-rear direction rib 22E therebetween, and is engaged with the right bracket 22 with perimeters thereof in contact with the right bracket 22.

For the above-described reason, the engaging projections 24I catch in the groove portions 22G in a state where the tubular portion 24E of the front-side noise-absorbing member 24 is attached to the right bracket 22. This prevents the front-side noise-absorbing member 24 from coming off the right bracket 22 and prevents the right bracket 22 from coming off the front-side noise-absorbing member 24.

In other words, the front-side noise-absorbing member 24 is put into a pierced state by insertion of the right bracket 22 into the tubular portion 24E. With engagement of the engaging projections 24I with the groove portions 22G, the front-side noise-absorbing member 24 is attached to the right bracket 22 in a state of being stopped from coming off the right bracket 22.

For the above-described reason, combined with effects of a shape of the tubular portion 24E, the front-side noise-absorbing member 24 is prevented from coming off the right bracket 22.

As shown in Figure 11, the engaging projections 24I protrude forward from a front end portion of the tubular portion 24E, and the engaging projections 24I engage with the groove portions 22G in a compressed state. This maintains a contact pressure between the engaging projections 24I and the groove portions 22G high.

As shown in Figures 8 and 9, a rear-side noise-absorbing member 25 which is made of an elastic member, such as polyurethane rubber, is attached to the right bracket 22 behind the connecting portion 22F, and the connecting portion 22F is located between the front-side noise-absorbing member 24 and the rear-side noise-absorbing member 25 in the front-rear direction. The front-side noise-absorbing member 24 according to the present embodiment constitutes a first noise-absorbing member, and the rear-side noise-absorbing member 25 constitutes a second noise-absorbing member.

The rear-side noise-absorbing member 25 includes an upper wall 25A which is in contact with the upper wall 22A of the right bracket 22, a left wall 25B which extends downward from a left end edge of the upper wall 25A and is in contact with the left wall 22B of the right bracket 22, a right wall 25C which extends downward from a right end edge of the upper wall 25A and is in contact with the right wall 22C of the right bracket 22, and a bottom wall 25D which connects a lower end portion of the left wall 25B and a lower end portion of the right wall 25C.

The upper wall 25A, the left wall 25B, the right wall 25C, and the bottom wall 25D are in contact with the outer peripheral portion of the right bracket 22 so as to surround the outer peripheral portion of the right bracket 22 on a rear side of the rear-side noise-absorbing member 25 and constitute a tubular portion 25E. The tubular portion 25E according to the present embodiment constitutes a third tubular portion.

In other words, the right bracket 22 is surrounded by the rear-side noise-absorbing member 25. The contact suppresses vibration of the right bracket 22 and inhibits emission of noise.

The tubular portion 25E, in which the right bracket 22 is inserted, is formed such that an inner dimension (open width) on the rear end portion 22b side of the right bracket 22 is formed smaller than an inner dimension (open width) on the connecting portion 22F side (the transfer device 14 side) of the right bracket 22.

For the above-described reason, the rear-side noise-absorbing member 25 is configured to be attachable to and detachable from the right bracket 22 attached to the transfer device 14, from the rear end portion 22b side of the right bracket 22.

As shown in Figure 9, the rear-side noise-absorbing member 25 has a front-side bottom wall 25F which extends forward from the bottom wall 25D of the tubular portion 25E and a front-side right wall 25G which protrudes upward from a right end edge of the front-side bottom wall 25F and extends forward so as to extend the right wall 25C of the tubular portion 25E.

The front-side bottom wall 25F and the front-side right wall 25G are in contact with the outer peripheral portion of the right bracket 22, and the rear-side noise-absorbing member 25 has no upper wall and no left wall in front of the tubular portion 25E. To the left of the front-side right wall 25G, the upper wall 22A of the right bracket 22 is exposed.

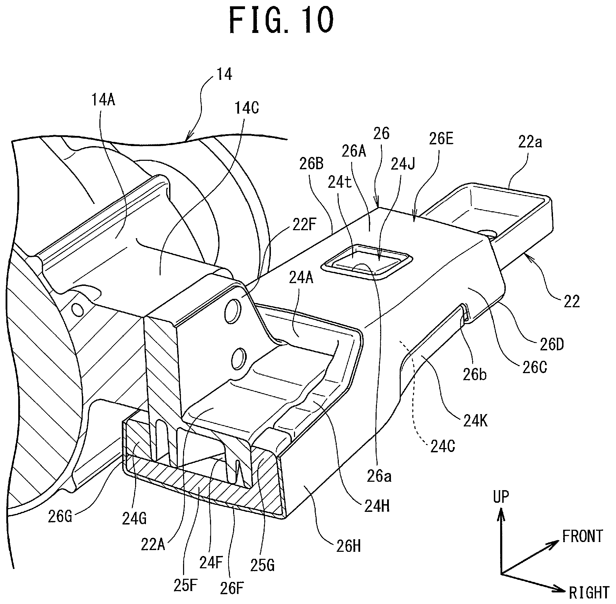

In other words, as shown in Figures 10 and 11, front ends of the front-side bottom wall 25F and the front-side right wall 25G reach a position of the connecting portion 22F of the right bracket 22, and the front-side bottom wall 25F and the front-side right wall 25G, together with the rear-side bottom wall 24F and the rear-side right wall 24H of the front-side noise-absorbing member 24, cover a portion below the connecting portion 22F and a portion to the right of the connecting portion 22F.

As shown in Figure 9, one pair of engaging projections 25H is formed at a rear end portion of the bottom wall 25D of the tubular portion 25E, and the engaging projections 25H protrude upward from the bottom wall 25D. That is, the engaging projections 25H protrude from the bottom wall 25D inside the tubular portion 25E.

As shown in Figure 13, one pair of groove portions 22H is formed between a rear end portion of the inclined rib 22D and the left wall 22B of the right bracket 22 and between a rear end portion of the inclined rib 22D and the right wall 22C of the right bracket 22 on the rear end portion 22b side of the right bracket 22. The engaging projections 25H are engaged with the groove portions 22H (see Figure 11).

For the above-described reason, the engaging projections 25H catch in the groove portions 22H in a state where the tubular portion 25E of the rear-side noise-absorbing member 25 is attached to the right bracket 22. With this configuration, the rear-side noise-absorbing member 25 is attached to the right bracket 22 in a state of being stopped from coming off the right bracket 22.

In other words, insertion of the right bracket 22 into the tubular portion 25E puts the rear-side noise-absorbing member 25 into a pierced state. With entry of the engaging projections 25H into the groove portions 22H and engagement of the engaging projections 25H with the groove portions 22H, the rear-side noise-absorbing member 25 is attached to the right bracket 22 in a state of being stopped from coming off the right bracket 22.

For the above-described reason, combined with effects of a shape of the tubular portion 25E, the rear-side noise-absorbing member 25 is prevented from coming off the right bracket 22. The engaging projections 25H according to the present embodiment constitute a second engaging portion.

As shown in Figure 11, the engaging projections 25H protrude rearward from a rear end portion of the tubular portion 25E, and the engaging projections 25H engage with the groove portions 22H in a compressed state. This maintains a contact pressure between the engaging projections 25H and the groove portions 22H high.

As shown in Figure 8, an in-vehicle component mount 22I is provided on the rear end portion 22b side of the right bracket 22, and the in-vehicle component mount 22I is provided behind the rear-side noise-absorbing member 25.

For example, a fuel pipe clamp (not shown) as an in-vehicle component is attached to the in-vehicle component mount 22I.

When the rear-side noise-absorbing member 25 tries to move rearward, the rear-side noise-absorbing member 25 comes into contact with an in-vehicle component attached to the in-vehicle component mount 22I. This restricts rearward movement of the rear-side noise-absorbing member 25. The rear-side noise-absorbing member 25 is stopped from coming off by the in-vehicle component.

As shown in Figures 8 and 9, a cover member 26 made of resin is attached to the right bracket 22 so as to cover the front-side noise-absorbing member 24.

The cover member 26 includes an upper wall 26A which is in contact with the upper wall 24A of the front-side noise-absorbing member 24, a left wall 26B which extends downward from a left end edge of the upper wall 26A and is in contact with the left wall 24B of the front-side noise-absorbing member 24, a right wall 26C which extends downward from a right end edge of the upper wall 26A and is in contact with the right wall 24C of the front-side noise-absorbing member 24, and a bottom wall 26D (see Figure 3) which connects a lower end portion of the left wall 26B and a lower end portion of the right wall 26C.

The upper wall 26A, the left wall 26B, the right wall 26C, and the bottom wall 26D are in contact with an outer peripheral portion of the front-side noise-absorbing member 24 so as to surround the outer peripheral portion of the front-side noise-absorbing member 24 at a front-side portion of the cover member 26 and constitute a tubular portion 26E. The tubular portion 26E according to the present embodiment constitutes a second tubular portion.

The tubular portion 26E of the cover member 26 covers the whole of the tubular portion 24E of the front-side noise-absorbing member 24, and a length in the front-rear direction of the tubular portion 26E is formed as a length just enough to maintain a position and a posture along the right bracket 22.

The tubular portion 26E, in which the front-side noise-absorbing member 24 is inserted, is formed such that an inner dimension (open width) on the front end portion 22a side of the right bracket 22 is smaller than an inner dimension (open width) on the connecting portion 22F side (the transfer device 14 side) of the right bracket 22.

For the above-described reason, the cover member 26 is configured to be attachable to and detachable from the front-side noise-absorbing member 24 attached to the right bracket 22, from the front end portion 22a side of the right bracket 22.

As shown in Figure 9, the cover member 26 has a rear-side bottom wall 26F which extends rearward from the tubular portion 26E and is in contact with the rear-side bottom wall 24F of the front-side noise-absorbing member 24, a rear-side left wall 26G which protrudes upward from a left end edge of the rear-side bottom wall 26F, extends rearward so as to extend the left wall 26B of the tubular portion 26E, and is in contact with the rear-side left wall 24G of the front-side noise-absorbing member 24, and a rear-side right wall 26H which protrudes upward from a right end edge of the rear-side bottom wall 26F, extends rearward so as to extend the right wall 26C of the tubular portion 26E, and is in contact with the rear-side right wall 24H of the front-side noise-absorbing member 24.

The cover member 26 has no upper wall behind the tubular portion 26E, and the upper wall 22A of the right bracket 22 is exposed between the rear-side left wall 26G and the rear-side right wall 26H.

Heights of the rear-side left wall 26G and the rear-side right wall 26H are formed lower than heights of the left wall 26B and the right wall 26C of the tubular portion 26E.

Lengths in the front-rear direction of the rear-side bottom wall 26F, the rear-side left wall 26G, and the rear-side right wall 26H are formed equal, and the rear-side bottom wall 26F, the rear-side left wall 26G, and the rear-side right wall 26H extend rearward further than the rear-side bottom wall 24F, the rear-side left wall 24G, and the rear-side right wall 24H of the front-side noise-absorbing member 24.

As shown in Figure 11, a rear end portion of the rear-side bottom wall 24F of the front-side noise-absorbing member 24 and a front end portion of the front-side bottom wall 25F of the rear-side noise-absorbing member 25 are in contact such that shapes thereof are continuous.

The rear-side bottom wall 26F of the cover member 26 is arranged beneath the rear-side bottom wall 24F and the front-side bottom wall 25F of the rear-side noise-absorbing member 25, and the cover member 26 covers over a gap between the rear-side bottom wall 24F and the front-side bottom wall 25F and supports the rear-side bottom wall 24F and the front-side bottom wall 25F from below.

As shown in Figure 10, a rear end portion of the rear-side right wall 24H of the front-side noise-absorbing member 24 and a front end portion of the front-side right wall 25G of the rear-side noise-absorbing member 25 are in contact. That is, a rear end portion of the front-side noise-absorbing member 24 and a front end portion of the rear-side noise-absorbing member 25 are in contact such that shapes thereof are continuous.

A gap in the up-down direction is formed between the rear-side left wall 24G and the rear-side bottom wall 26F of the cover member 26, and the front-side bottom wall 25F of the rear-side noise-absorbing member 25 lies beneath the rear-side left wall 24G of the front-side noise-absorbing member 24. That is, the front-side bottom wall 25F of the rear-side noise-absorbing member 25 is arranged between the rear-side left wall 24G and the rear-side bottom wall 26F of the cover member 26.

The connecting portion 14C of the case 14A of the transfer device 14 protrudes above the cover member 26 and is opposed to the cover member 26 in the up-down direction. The rear-side left wall 24G of the front-side noise-absorbing member 24 and the front-side bottom wall 25F of the rear-side noise-absorbing member 25 are arranged between the rear-side bottom wall 26F of the cover member 26 and the case 14A in the up-down direction and are prevented from coming off.

In other words, the rear-side left wall 24G of the front-side noise-absorbing member 24, the front-side bottom wall 25F of the rear-side noise-absorbing member 25, the rear-side bottom wall 26F of the cover member 26, and the case 14A are arranged to be lined up in the up-down direction.

As shown in Figures 8 and 10, the rear-side right wall 26H of the cover member 26 covers the rear end portion of the rear-side right wall 24H of the front-side noise-absorbing member 24 and the front end portion of the front-side right wall 25G of the rear-side noise-absorbing member 25.

That is, the rear-side right wall 26H of the cover member 26 covers a point of contact between the rear-side right wall 24H of the front-side noise-absorbing member 24 and the front-side right wall 25G of the rear-side noise-absorbing member 25.

In the front-side noise-absorbing member 24, the rear-side bottom wall 24F, the rear-side left wall 24G, and the rear-side right wall 24H that are U-shaped extend rearward from the tubular portion 24E below the connecting portion 22F of the right bracket 22. The rear-side bottom wall 24F, the rear-side left wall 24G, and the rear-side right wall 24H may droop down.

However, the rear-side bottom wall 24F, the rear-side left wall 24G, and the rear-side right wall 24H are covered from below by the cover member 26 higher in rigidity than the front-side noise-absorbing member 24. The covering supports the rear-side bottom wall 24F, the rear-side left wall 24G, and the rear-side right wall 24H, which can be prevented from drooping down.

It is thus possible to prevent the front-side noise-absorbing member 24 from coming off the right bracket 22 and from being elastically deformed to deteriorate in durability.

Note that a posture of the cover member 26 is retained by the tubular portion 26E composed of the upper wall 26A, the left wall 26B, the right wall 26C, and the bottom wall 26D being in contact with the front-side noise-absorbing member 24 so as to surround the outer peripheral portion of the front-side noise-absorbing member 24.

As shown in Figures 10 and 11, a hole 26a is formed in the upper wall 26A of the cover member 26. An engaging projection 24J is formed on the upper wall 24A of the front-side noise-absorbing member 24, and the engaging projection 24J protrudes outward from the hole 26a. With engagement of the hole 26a with the engaging projection 24J, the cover member 26 is stopped from coming off the front-side noise-absorbing member 24. The hole 26a according to the present embodiment constitutes an engaging portion.

An inclined surface 24t is formed at an upper surface of the engaging projection 24J, and the inclined surface 24t is inclined upward so as to increase in height from a front end portion on the front end portion 22a side of the right bracket 22 toward a rear end portion on the rear end portion 22b side of the right bracket 22. The engaging projection 24J according to the present embodiment constitutes a protruding portion.

Since the tubular portion 26E is formed such that the inner dimension (open width) on the front end portion 22a side of the right bracket 22 is smaller than the inner dimension (open width) on the connecting portion 22F side (the transfer device 14 side) of the right bracket 22, if the cover member 26 tries to move rearward, the cover member 26 cannot move rearward further than in an attached state where the cover member 26 is in contact with the front-side noise-absorbing member 24.

If the cover member 26 tries to move toward the front end portion 22a side of the right bracket 22 with respect to the front-side noise-absorbing member 24, the hole 26a comes into contact with a rear end portion which is highest of the engaging projection 24J. This reliably stops the cover member 26 from coming off the front-side noise-absorbing member 24. The engaging projection 24J according to the present embodiment constitutes a first engaging portion.

As shown in Figure 10, a notch hole 26b is formed in a lower portion of the right wall 26C of the cover member 26. An engaging projection 24K which is long in the front-rear direction is formed on the right wall 24C of the front-side noise-absorbing member 24, and the engaging projection 24K is fitted in the notch hole 26b.

For the above-described reason, combined with engagement with the first engaging portion, the cover member 26 is effectively stopped from coming off the front-side noise-absorbing member 24.

As shown in Figure 11, the tubular portion 26E of the cover member 26 covers points of engagement between the engaging projections 24I of the front-side noise-absorbing member 24 and the groove portions 22G of the right bracket 22, and the front-side noise-absorbing member 24 is surrounded by the tubular portion 26E. For this reason, the engaging projections 24I are less likely to move so as to get out of the groove portions 22G, and a state where the engaging projections 24I are engaged with the groove portions 22G is maintained.

Action of a noise-absorbing structure for the transfer device 14 according to the present embodiment will be described.

As for the noise-absorbing member 23 according to the present embodiment, in a state before the left bracket 21 is mounted on the vehicle 1, the tubular portion 23G is inserted into the left bracket 21 fixed to the transfer device 14 from the left end portion 21a, and the boss portion 21F is inserted into the hole 23a while the left end portion 21a side of the left bracket 21 is grasped with the tubular portion 23G.

When the boss portion 21F is inserted into the hole 23a, the boss portion 21F comes into contact with the thin-plate portion 23E, and the thin-plate portion 23E is deformed so as to open the slit 23s. This allows the boss portion 21F to be easily inserted into the hole 23a.

A width in the front-rear direction of the left bracket 21 is formed narrower on the left side frame 2 side and wider on the transfer device 14 side than on the left side frame 2 side. A width in the front-rear direction of the noise-absorbing member 23 is formed narrower on the left side frame 2 side and wider on the transfer device 14 side than on the left side frame 2 side.

For the above-described reason, in a state where the noise-absorbing member 23 is attached to the left bracket 21, the noise-absorbing member 23 is capable of moving toward the left side frame 2 side along the left bracket 21 but is incapable of moving toward the transfer device 14 side.

As for the noise-absorbing member 23 and the left side frame 2, engagement of the boss portion 21F of the left bracket 21 with the hole 23a of the upper wall 23A of the noise-absorbing member body portion 23H stops the noise-absorbing member 23 from coming off the left bracket 21 and makes the noise-absorbing member 23 incapable of moving toward the left side frame 2 side with respect to the left bracket 21.

If vibration transmitted from the transfer device 14 to the left bracket 21 drives the noise-absorbing member 23 to come off the left bracket 21, the noise-absorbing member 23 may pivot about the tubular portion 23G such that the hole 23a side (a right side) is lifted upward, as shown in Figure 7.

In the above-described case, the boss portion 21F of the left bracket 21 engages with the hole 23a of the noise-absorbing member body portion 23H, which blocks the noise-absorbing member 23 from moving leftward and upward.

In other words, the noise-absorbing member 23 is put into a pierced state by insertion of the left bracket 21 into the tubular portion 23G. With engagement of the boss portion 21F with the hole 23a, the noise-absorbing member 23 is attached to the left bracket 21 in a state of being stopped from coming off the left bracket 21.

Additionally, upon occurrence of a pivot about the tubular portion 23G which lifts up the right side, the boss portion 21F of the left bracket 21 engages effectively with the hole 23a to block leftward and upward movement of the noise-absorbing member 23.

With the above-described configuration, it is possible to prevent the noise-absorbing member 23 from coming off the left bracket 21 when vibration is applied from the transfer device 14 to the left bracket 21 and stably attach the noise-absorbing member 23 to the left bracket 21.

As a result, noise caused by vibration transmitted from the transfer device 14 to the left bracket 21 can be absorbed by the noise-absorbing member 23, and noise emanating from the transfer device 14 can be reduced.

The front-side noise-absorbing member 24 is put into a pierced state by insertion of the right bracket 22 into the tubular portion 24E. With engagement of the engaging projections 24I with the groove portions 22G, the front-side noise-absorbing member 24 is attached to the right bracket 22 in a state of being stopped from coming off the right bracket 22.

The rear-side noise-absorbing member 25 is put into a pierced state by insertion of the right bracket 22 into the tubular portion 25E of the rear-side noise-absorbing member 25. With engagement of the engaging projections 25H with the groove portions 22H, the rear-side noise-absorbing member 25 is attached to the right bracket 22 in a state of being stopped from coming off the right bracket 22.

Thus, noise caused by vibration transmitted from the transfer device 14 to the right bracket 22 can be absorbed by the front-side noise-absorbing member 24 and the rear-side noise-absorbing member 25, and noise emanating from the transfer device 14 can be reduced.

As a result, noise emanating from the transfer device 14 can be reduced by the noise-absorbing member 23, the front-side noise-absorbing member 24, and the rear-side noise-absorbing member 25, and quietness of the vehicle 1 can be enhanced.

The right bracket 22 is arranged so as to extend in the front-rear direction along the right side frame 3 near the right side frame 3 extending in the front-rear direction. Snow is likely to accumulate on an upper portion of the right bracket 22 in winter. Water raised by the front wheels or the like due to running comes from below to the right bracket 22.

When snow accumulated on the right bracket 22 melts, the snow turns into water. When the water gets cold, the water turns into ice. The front-side noise-absorbing member 24 and the rear-side noise-absorbing member 25 are thus exposed to a harsh environment.

Since water expands when the water freezes, water in a gap between the right bracket 22 and the front-side noise-absorbing member 24, a gap between the right bracket 22 and the rear-side noise-absorbing member 25, and a gap between the front-side noise-absorbing member 24 and the rear-side noise-absorbing member 25 becomes an obstacle to the front-side noise-absorbing member 24 and the rear-side noise-absorbing member 25 that are made of relatively soft materials.

In the noise-absorbing structure for the transfer device 14 according to the present embodiment, the cover member 26 made of resin that is harder than the front-side noise-absorbing member 24 is attached to the front-side noise-absorbing member 24, the rear-side right wall 26H of the cover member 26 covers the point of contact between the rear-side right wall 24H of the front-side noise-absorbing member 24 and the front-side right wall 25G of the rear-side noise-absorbing member 25, and the rear-side bottom wall 26F of the cover member 26 covers the point of contact between the rear-side bottom wall 24F of the front-side noise-absorbing member 24 and the front-side bottom wall 25F of the rear-side noise-absorbing member 25.

With the above-described configuration, snow and water can be prevented from penetrating into the gap between the right bracket 22 and the front-side noise-absorbing member 24, the gap between the right bracket 22 and the rear-side noise-absorbing member 25, and a gap between the rear-side bottom wall 24F and the front-side bottom wall 25F and turning into ice, and the front-side noise-absorbing member 24 and the rear-side noise-absorbing member 25 can be protected from snow and ice.

In addition, since the tubular portion 24E of the front-side noise-absorbing member 24 is covered by the tubular portion 26E of the cover member 26, the front-side noise-absorbing member 24 can be protected from snow, an incoming stone from ahead, and the like.

The engaging projections 24I are formed at the tubular portion 24E of the front-side noise-absorbing member 24, and the engaging projections 24I are elastically deformed in a state of being engaged with the groove portions 22G. This maintains the contact pressure between the engaging projections 24I and the groove portions 22G high.

The engaging projections 25H are formed at the tubular portion 25E of the rear-side noise-absorbing member 25, and the engaging projections 25H are elastically deformed in a state of being engaged with the groove portions 22H. This maintains the contact pressure between the engaging projections 25H and the groove portions 22H high.

For the above-described reason, the engaging projections 24I and 25H can prevent snow from penetrating into between the front-side noise-absorbing member 24 and the right bracket 22 and between the rear-side noise-absorbing member 25 and the right bracket 22 and turning into ice, and the front-side noise-absorbing member 24 and the rear-side noise-absorbing member 25 can be protected from snow.

The exhaust pipe 42 is arranged below the left bracket 21. As for the noise-absorbing member 23 attached to the left bracket 21, snow deposited on the noise-absorbing member 23 is melted by heat of the exhaust pipe 42. Thus, the noise-absorbing member 23 is at low risk of being damaged by icing.

Although the noise-absorbing member body portion 23H of the noise-absorbing member 23 and the exhaust pipe 42 are opposed to each other in the up-down direction, the noise-absorbing member body portion 23H is open at a lower surface, and the lower surface of the left bracket 21 is not covered by the noise-absorbing member body portion 23H. It is thus possible to inhibit the noise-absorbing member body portion 23H from being affected by heat of the exhaust pipe 42 and protect the noise-absorbing member 23 from exhaust heat.

Since the left bracket 21 is naked above the exhaust pipe 42, heat of the exhaust pipe 42 allows transmission of heat to the left bracket 21 made of metal, and snow deposited on the left bracket 21 can be easily melted.

In other words, the noise-absorbing member 23 is formed in a shape capable of easily melting snow deposited on the left bracket 21 while preventing direct exposure to heat of the exhaust pipe 42.

Effects of the noise-absorbing structure for the transfer device 14 according to the present embodiment will be described.

In the noise-absorbing structure for the transfer device 14 according to the present embodiment, the front-side noise-absorbing member 24 has the tubular portion 24E, into which the right bracket 22 is to be inserted, and the engaging projections 24I that are to be engaged with the right bracket 22.

With the above-described configuration, the front-side noise-absorbing member 24 can be easily attached to the right bracket 22 by inserting the right bracket 22 into the tubular portion 24E and engaging the engaging projections 24I with the right bracket 22.

It is thus possible to reduce the number of work man-hours to attach the front-side noise-absorbing member 24 to the right bracket 22 and enhance work efficiency of the work of attaching the front-side noise-absorbing member 24.

Additionally, the outer peripheral portion of the right bracket 22 is covered by the tubular portion 24E of the front-side noise-absorbing member 24. This allows enhancement of noise barrier performance of the transfer device 14 and enhancement of quietness of the vehicle 1.

In the noise-absorbing structure for the transfer device 14, the cover member 26 is arranged on the front-side noise-absorbing member 24, the cover member 26 has the tubular portion 26E that covers an outer peripheral portion of the tubular portion 24E, and the engaging projections 24I are pushed against the right bracket 22 by the tubular portion 26E.

With the above-described configuration, the front-side noise-absorbing member 24 can be protected by the cover member 26. Additionally, the engaging projections 24I can be strongly engaged with the right bracket 22, and the front-side noise-absorbing member 24 can be reliably prevented from coming off the right bracket 22. As a result, it is possible to prevent reliability of the noise barrier performance of the transfer device 14 from decreasing.

In the noise-absorbing structure for the transfer device 14 according to the present embodiment, the engaging projection 24J that protrudes outward from the upper wall 24A is formed on the upper wall 24A of the front-side noise-absorbing member 24.

In addition, the hole 26a is formed in the cover member 26. With entry of the engaging projection 24J into the hole 26a, the engaging projection 24J is engaged with the hole 26a.

With the above-described configuration, the cover member 26 can be prevented from coming off the front-side noise-absorbing member 24, and the front-side noise-absorbing member 24 can be reliably protected by the cover member 26.

The engaging projection 24J is constructed using elastic force of the front-side noise-absorbing member 24, and the engaging projection 24J can be tightly engaged with the hole 26a of the cover member 26.

For the above-described reason, elasticity of the cover member 26 is not needed. Hardness of the cover member 26 can be increased, and the robust cover member 26 can be used. It is thus possible to more effectively protect the front-side noise-absorbing member 24 by the cover member 26.

The noise-absorbing structure for the transfer device 14 according to the present embodiment includes the rear-side noise-absorbing member 25 that is provided separately from the front-side noise-absorbing member 24 and has the tubular portion 25E, into which the right bracket 22 is to be inserted.

In the direction, in which the right bracket 22 extends, the rear end portion of the front-side noise-absorbing member 24 and the front end portion of the rear-side noise-absorbing member 25 are in contact. The cover member 26 has the rear-side bottom wall 26F, the rear-side left wall 26G, and the rear-side right wall 26H that cover a point of contact between the rear end portion of the front-side noise-absorbing member 24 and the front end portion of the rear-side noise-absorbing member 25.

The rear-side bottom wall 26F of the cover member 26 is arranged beneath the rear-side bottom wall 24F and the front-side bottom wall 25F of the rear-side noise-absorbing member 25, and the cover member 26 covers over the gap between the rear-side bottom wall 24F and the front-side bottom wall 25F and supports the rear-side bottom wall 24F and the front-side bottom wall 25F from below.

The rear-side right wall 26H of the cover member 26 is arranged to the right of the rear-side right wall 24H of the front-side noise-absorbing member 24 and the front-side right wall 25G of the rear-side noise-absorbing member 25, and the cover member 26 covers over a gap between the rear-side right wall 24H and the front-side right wall 25G and inhibits the rear-side right wall 24H and the front-side right wall 25G from moving away from the right wall 22C of the right bracket 22.

The rear-side left wall 26G of the cover member 26 is arranged to the left of the rear-side left wall 24G of the front-side noise-absorbing member 24 and the left wall 25B of the rear-side noise-absorbing member 25, and the cover member 26 covers over a gap between the rear-side left wall 24G and the left wall 25B and inhibits the rear-side left wall 24G and the left wall 25B from moving away from the left wall 22B of the right bracket 22.

With the above-described configuration, leakage of noise from the front-side noise-absorbing member 24 and the rear-side noise-absorbing member 25 can be prevented by the cover member 26, and the noise barrier performance of the transfer device 14 can be more effectively enhanced.

The rear-side bottom wall 26F, the rear-side left wall 26G, and the rear-side right wall 26H can prevent snow, dust, and the like from penetrating into the gap between the front-side noise-absorbing member 24 and the right bracket 22, the gap between the rear-side noise-absorbing member 25 and the right bracket 22, and the gap between the front-side noise-absorbing member 24 and the rear-side noise-absorbing member 25. It is thus possible to prevent the front-side noise-absorbing member 24 and the rear-side noise-absorbing member 25 from being damaged by icing.

In the noise-absorbing structure for the transfer device 14 according to the present embodiment, the tubular portion 25E of the rear-side noise-absorbing member 25 has the engaging projections 25H that engage with the right bracket 22. The rear-side noise-absorbing member 25 can be easily attached to the right bracket 22 by inserting the right bracket 22 into the tubular portion 25E and engaging the engaging projections 25H with the right bracket 22.

It is thus possible to reduce the number of work man-hours to attach the rear-side noise-absorbing member 25 to the right bracket 22 and enhance work efficiency of the work of attaching the rear-side noise-absorbing member 25.

The rear-side noise-absorbing member 25 can be reliably prevented from coming off the right bracket 22 by engaging the engaging projections 25H with the right bracket 22. It is thus possible to prevent reliability of noise-absorbing performance from decreasing.

In the noise-absorbing structure for the transfer device 14 according to the present embodiment, the connecting portion 14C of the case 14A of the transfer device 14 protrudes above the cover member 26 and is opposed to the cover member 26 in the up-down direction, and the rear-side left wall 24G of the front-side noise-absorbing member 24 and the front-side bottom wall 25F of the rear-side noise-absorbing member 25 are arranged between the rear-side bottom wall 26F of the cover member 26 and the case 14A in the up-down direction.

With the above-described configuration, the front-side noise-absorbing member 24 and the rear-side noise-absorbing member 25 can be held by the case 14A and the cover member 26 therebetween in the up-down direction, and the front-side noise-absorbing member 24 and the rear-side noise-absorbing member 25 can be prevented from coming off the right bracket 22.

Since the rear-side left wall 24G of the front-side noise-absorbing member 24 and the front-side bottom wall 25F of the rear-side noise-absorbing member 25 are arranged between the rear-side bottom wall 26F of the cover member 26 and the case 14A in the up-down direction, the front-side noise-absorbing member 24 and the rear-side noise-absorbing member 25 can be arranged close to the transfer device 14. This allows reduction in an arrangement space of the front-side noise-absorbing member 24 and the rear-side noise-absorbing member 25.

Note that although the vehicle driving device according to the present embodiment is composed of the transfer device 14, the vehicle driving device is not limited to the transfer device 14. The vehicle driving device may be applied to the engine 11 and the transmission 12 and is not limited to the engine 11 and the transmission 12.

### [Reference Signs List]

2...left side frame (vehicle body), 3...right side frame (vehicle body), 6...center cross-member (vehicle body), 14...transfer device (vehicle driving device), 22...right bracket (bracket), 24...front-side noise-absorbing member (noise-absorbing member, first noise-absorbing member), 24E...tubular portion (first tubular portion), 24I...engaging projection (first engaging portion), 24J...engaging projection (protruding portion), 25...rear-side noise-absorbing member (noise-absorbing member, second noise-absorbing member), 25H...engaging projection (second engaging portion), 26...cover member, 26a...hole, 26E...tubular portion (second tubular portion)

## Claims

1. A noise-absorbing structure for a vehicle driving device, comprising a noise-absorbing member assembly (24, 25) that includes a first noise-absorbing member (24) and a second noise-absorbing member (25), a bracket (22) inserting into the first noise-absorbing member (24) and the second noise-absorbing member (25), and a cover member (26) surrounding the noise-absorbing member assembly (24, 25),
**characterized in that**:
the bracket (22), for attaching a vehicle driving device (14) to a vehicle body (2, 3, 6), is formed with groove portions (22G, 22H);
the first noise-absorbing member (24) has a first tubular portion (24E), into which the bracket (22) is inserted, and a first engaging portion (24I) which engages with the associated one (22G) of the groove portions (22G, 22H) of the bracket (22), and
the cover member (26) has a second tubular portion (26E) arranged on the first noise-absorbing member (24) to push the first tubular portion (24E) against the bracket (22) to retain the engagement of the first engaging portion (24I) with the associated one (22G) of the groove portions (22G, 22H) of the bracket (25).

2. The noise-absorbing structure according to claim 1, **characterized in that**:
the first noise-absorbing member (24) has a protruding portion (24J) formed at its outer peripheral portion and protruding outward from the outer peripheral portion,
the cover member (26) is formed with a hole (26a), and
the protruding portion (24J) is arranged to enter and engage with the hole (26a).

3. The noise-absorbing structure according to claim 1 or 2, **characterized in that**:
the second noise-absorbing member (25), which is provided separately from the first noise-absorbing member (24), has a third tubular portion (25E) into which the bracket (22) is inserted,
the first noise-absorbing member (24) and the second noise-absorbing member (25) are in direct contact with each other at their one ends that are arranged in a direction in which the bracket (22) extends, and
the cover member (26) covers where the first noise-absorbing member (24) and the second noise-absorbing member (25) are in direct contact with each other.

4. The noise-absorbing structure according to claim 3, **characterized in that**:
the third tubular portion (25E) has a second engaging portion (25H) which engages with other one (22H) of the groove portions (22G, 22H) of the bracket (22).

## Patentansprüche

1. Geräuschdämpfungsstruktur für eine Fahrzeugantriebsvorrichtung, umfassend eine Geräuschdämpfungselement-Anordnung (24, 25), welche ein erstes Geräuschdämpfungselement (24) und ein zweites Geräuschdämpfungselement (25) umfasst, eine Halterung (22), welche in das erste Geräuschdämpfungselement (24) und das zweite Geräuschdämpfungselement (25) eingesetzt ist, und ein Abdeckelement (26), welches die Geräuschdämpfungselement-Anordnung (24, 25) umgibt,
**dadurch gekennzeichnet, dass**:
die Halterung (22), zum Anbringen einer Fahrzeugantriebsvorrichtung (14) an einem Fahrzeugkörper (2, 3, 6), mit Nutabschnitten (22G, 22H) gebildet ist;
das erste Geräuschdämpfungselement (24) einen ersten rohrförmigen Abschnitt (24E), in welchen die Halterung (22) eingesetzt ist, und einen ersten Eingriffsabschnitt (24I) aufweist, welcher mit dem zugeordneten (22G) der Nutabschnitte (22G, 22H) der Halterung (22) in Eingriff steht, und
das Abdeckelement (26) einen zweiten rohrförmigen Abschnitt (26E) aufweist, welcher an dem ersten Geräuschdämpfungselement (24) angeordnet ist, um den ersten rohrförmigen Abschnitt (24E) gegen die Halterung (22) zu drücken, um den Eingriff des ersten Eingriffsabschnitts (24I) mit dem zugeordneten (22G) der Nutabschnitte (22G, 22H) der Halterung (25) aufrechtzuerhalten.

2. Geräuschdämpfungsstruktur nach Anspruch 1, **dadurch gekennzeichnet, dass**:
das erste Geräuschdämpfungselement (24) einen vorstehenden Abschnitt (24J) aufweist, welcher an seinem äußeren Umfangsabschnitt gebildet ist und von dem äußeren Umfangsabschnitt nach außen vorsteht,
das Abdeckelement (26) mit einem Loch (26a) gebildet ist, und
der vorstehende Abschnitt (24J) derart angeordnet ist, dass er in das Loch (26a) eintritt und damit in Eingriff steht.

3. Geräuschdämpfungsstruktur nach Anspruch 1 oder 2, **dadurch gekennzeichnet, dass**:
das zweite Geräuschdämpfungselement (25), welches getrennt von dem ersten Geräuschdämpfungselement (24) bereitgestellt ist, einen dritten rohrförmigen Abschnitt (25E) aufweist, in welchen die Halterung (22) eingesetzt ist,
das erste Geräuschdämpfungselement (24) und das zweite Geräuschdämpfungselement (25) an ihren einen Enden, welche in einer Richtung angeordnet sind, in welcher sich die Halterung (22) erstreckt, in direktem Kontakt miteinander stehen, und
das Abdeckelement (26) abdeckt, wo das erste Geräuschdämpfungselement (24) und das zweite Geräuschdämpfungselement (25) in direktem Kontakt miteinander stehen.

4. Geräuschdämpfungsstruktur nach Anspruch 3, **dadurch gekennzeichnet, dass**:
der dritte rohrförmige Abschnitt (25E) einen zweiten Eingriffsabschnitt (25H) aufweist, welcher mit dem anderen (22H) der Nutabschnitte (22G, 22H) der Halterung (22) in Eingriff steht.

## Revendications

1. Structure d'absorption de bruit pour un dispositif d'entraînement de véhicule, comprenant un ensemble d'éléments d'absorption de bruit (24, 25) qui comporte un premier élément d'absorption de bruit (24) et un second élément d'absorption de bruit (25), un support (22) s'insérant dans le premier élément d'absorption de bruit (24) et le second élément d'absorption de bruit (25), et un élément de recouvrement (26) entourant l'ensemble d'éléments d'absorption de bruit (24, 25),
**caractérisée en ce que** :
le support (22), pour fixer un dispositif d'entraînement de véhicule (14) à un corps de véhicule (2, 3, 6), est formé avec des parties rainures (22G, 22H) ;
le premier élément d'absorption de bruit (24) présente une première partie tubulaire (24E), dans laquelle le support (22) est inséré, et une première partie de mise en prise (24I) qui vient en prise avec la partie (22G) associée parmi les parties rainures (22G, 22H) du support (22), et
l'élément de recouvrement (26) présente une deuxième partie tubulaire (26E) agencée sur le premier élément d'absorption de bruit (24) pour pousser la première partie tubulaire (24E) contre le support (22) pour maintenir la mise en prise de la première partie de mise en prise (24I) avec la partie (22G) associée parmi les parties rainures (22G, 22H) du support (25).

2. Structure d'absorption de bruit selon la revendication 1, **caractérisée en ce que** :
le premier élément d'absorption de bruit (24) présente une partie saillante (24J) formée au niveau de sa partie périphérique externe et faisant saillie vers l'extérieur à partir de la partie périphérique externe,
l'élément de recouvrement (26) est formé avec un trou (26a), et
la partie saillante (24J) est agencée pour entrer dans le trou (26a) et venir en prise avec celui-ci.

3. Structure d'absorption de bruit selon la revendication 1 ou 2, **caractérisée en ce que** :
le second élément d'absorption de bruit (25), qui est prévu séparément du premier élément d'absorption de bruit (24), présente une troisième partie tubulaire (25E) dans laquelle le support (22) est inséré,
le premier élément d'absorption de bruit (24) et le second élément d'absorption de bruit (25) sont en contact direct l'un avec l'autre au niveau de leurs premières extrémités qui sont agencées dans une direction dans laquelle le support (22) s'étend, et
l'élément de recouvrement (26) recouvre l'endroit où le premier élément d'absorption de bruit (24) et le second élément d'absorption de bruit (25) sont en contact direct l'un avec l'autre.

4. Structure d'absorption de bruit selon la revendication 3, **caractérisée en ce que** :
la troisième partie tubulaire (25E) présente une seconde partie de mise en prise (25H) qui vient en prise avec une autre (22H) des parties rainures (22G, 22H) du support (22).
